# EUROPÄISCHE PATENTSCHRIFT

(11) **EP 2 864 076 B1**
(45) Veröffentlichungstag und Bekanntmachung des Hinweises auf die Patenterteilung: **22.09.2021**
(21) Anmeldenummer: 13721315.3
(22) Anmeldetag: 26.04.2013
(51) Int. Cl.: B23K 26/00

(54) **BAUTEILEVERBUND, VERFAHREN ZUM HERSTELLEN EINES BAUTEILEVERBUNDS SOWIE VERWENDUNG EINES BAUTEILEVERBUNDS**
COMPOSITE COMPONENT, METHOD FOR PRODUCING A COMPOSITE COMPONENT AND USE OF A COMPOSITE COMPONENT
PIÈCE COMPOSITE, PROCÉDÉ DE FABRICATION D'UNE PIÈCE COMPOSITE ET UTILISATION D'UNE PIÈCE COMPOSITE

(30) Priorität: 22.06.2012 DE 102012210621
(43) Veröffentlichungstag der Anmeldung: 29.04.2015
(73) Patentinhaber: Robert Bosch GmbH, 70442 Stuttgart (DE)
(72) Erfinder: RAMSAYER, Reiner, 71277 Rutesheim (DE); HONER, Michael, 70839 Gerlingen (DE)
(86) Internationale Anmeldenummer: PCT/EP2013/058770
(87) Internationale Veröffentlichungsnummer: WO 2013/189650

(56) Entgegenhaltungen:
- WO-A1-2013/178550
- WO-A2-01/12433
- DE-A1-102008 040 782

## Beschreibung

### Stand der Technik

Die Erfindung betrifft einen Bauteileverbund nach dem Oberbegriff des Anspruchs 1. Ferner betrifft die Erfindung ein Verfahren zum Herstellen eines Bauteileverbunds nach dem Oberbegriff des Anspruchs 5 sowie die Verwendung eines erfindungsgemäßen Bauteileverbunds.

Ein Bauteileverbund sowie ein Verfahren zum Herstellen eines Bauteileverbunds nach den Oberbegriffen der beiden unabhängigen Ansprüche sind aus der DE 10 2008 040 782 A1 der Anmelderin bekannt. Bei dem bekannten Bauteileverbund ist es vorgesehen, dass an einem ersten, aus Metall bestehenden Bauteil eine erste Kontaktoberfläche ausgebildet ist. Die erste Kontaktoberfläche wird mittels elektromagnetischer Strahlung, insbesondere mittels einer Laserstrahleinrichtung erzeugt, und weist eine Oberflächenstruktur auf, die eine von einer Nanostruktur überlagerte Mikrostruktur umfasst. Das so ausgebildete erste Bauteil bzw. dessen erste Kontaktoberfläche wird in Anlage mit einer zweiten Kontaktoberfläche eines zweiten Bauteils gebracht. Hierbei besteht das zweite Bauteil aus Kunststoff, wobei das Material des zweiten Bauteils zur Anlage der zweiten Kontaktoberfläche an der ersten Kontaktoberfläche über den Schmelzpunkt des Materials des zweiten Bauteils erwärmt wird. Zusätzlich kann der Bauteileverbund noch eine Formschlussverbindung aufweisen, die durch Umspritzen des ersten Bauteils durch das zweite Bauteil entsteht, wobei das erste Bauteil eine geeignete Formschlussgeometrie aufweist. Der aus der genannten Schrift bekannte Bauteileverbund ermöglicht einen relativ festen Verbund bzw. eine relativ feste und dichte Verbindung zwischen den beiden Bauteilen. Der Bauteileverbund ist jedoch auf Anwendungen beschränkt, bei denen das erste Bauteil aus Metall, Keramik oder Kunststoff und das zweite Bauteil aus Kunststoff besteht. Anregungen, wie der bekannte Bauteilverbund auf andere Anwendungen übertragbar ist, sind der genannten Schrift nicht entnehmbar.

Dokument WO 2013/178550 A1 offenbart eine Anordnung, welche einen Grundkörper und eine auf den Grundkörper aufgeschmolzene Struktur umfasst. Das Material des Grundkörpers kann dabei aus einem metallischen Element ausgebildet sein. Weiterhin kann auch die auf den Grundkörper aufgeschmolzene Struktur aus einem metallischen Element ausgebildet sein. Des Weiteren kann die Struktur Nanostrukturen und Mikrostrukturen aufweisen.

Dokument WO 2001/012433 A2 offenbart bspw. einen Batterieverbund umfassend eine Nanostruktur und eine Mikrostruktur.

### Offenbarung der Erfindung

Ausgehend von dem dargestellten Stand der Technik liegt der Erfindung die Aufgabe zugrunde, einen Bauteileverbund bzw. ein Verfahren zum Herstellen eines Bauteileverbunds nach den Oberbegriffen der beiden unabhängigen Ansprüche derart weiterzubilden, dass sich erweiterte Anwendungsmöglichkeiten für den Bauteileverbund ergeben. Insbesondere sollen derartige, erweiterte Anwendungsmöglichkeiten in der Möglichkeit einer Stromleitung bzw. Stromführung gegeben sein.

Diese Aufgabe wird erfindungsgemäß bei einem Bauteileverbund bzw. einem Verfahren zum Herstellen eines Bauteileverbunds mit den Merkmalen der unabhängigen Ansprüche 1 und 5 gelöst. Dem liegt die Idee zugrunde, das zweite Bauteil des Bauteileverbunds, in Analogie zum ersten Bauteil, ebenfalls aus Metall auszubilden. Dadurch wird es möglich, den Bauteileverbund zur Stromführung bzw. Stromleitung, beispielsweise in Komponenten der Kraftfahrzeugtechnik, zu verwenden.

Dabei umfasst der Bauteileverbund ein erstes Bauteil mit einer ersten Kontaktoberfläche und mindestens einem zweiten Bauteil mit einer an der ersten Kontaktoberfläche anliegenden zweiten Kontaktoberfläche, wobei die erste Kontaktoberfläche eine Oberflächenstruktur hat, die eine von einer Nanostruktur überlagerte Mikrostruktur aufweist, wobei die Anlage der zweiten Kontaktoberfläche an der ersten Kontaktoberfläche durch zumindest teilweises Aufschmelzen des Materials des zweiten Bauteils erfolgt, wobei das zweite Bauteil aus Metall besteht. Vorzugsweise ist der Schmelzpunkt des Materials des ersten Bauteils höher ist als der Schmelzpunkt des Materials des zweiten Bauteils.

Das Verfahren zum Herstellen des Bauteileverbunds zeichnet sich dadurch aus, dass das Erwärmen des Materials des zweiten Bauteils über seinen Schmelzpunkt lediglich lokal im Anlagebereich der zweiten Kontaktoberfläche an der ersten Kontaktoberfläche des ersten Bauteils erfolgt. Dadurch wird der Vorteil erzielt, dass die beiden Bauteile beispielsweise in einer Kraftfahrzeugkomponente bereits vormontiert bzw. positioniert werden können, so dass die Ausbildung des Bauteileverbunds lokal in der Kraftfahrzeugkomponente erfolgen kann. Darüber hinaus wird durch das lediglich lokale Erwärmen, insbesondere beim bereits in Wirkverbindung mit anderen Bauteilen angeordnetem zweiten Bauteil der Vorteil erzielt, dass die thermische Belastung der anderen Bauteile (durch die Wärmeleitung über das zweite Bauteil) verringert bzw. minimiert wird.

Vorteilhafte Weiterbildungen des erfindungsgemäßen Bauteileverbunds bzw. des Verfahrens zum Herstellen des erfindungsgemäßen Bauteileverbunds sind in den jeweiligen Unteransprüchen angegeben. In den Rahmen der Erfindung fallen sämtliche Kombinationen aus zumindest zwei von in den Ansprüchen, der Beschreibung und/oder den Figuren offenbarten Merkmalen. Dabei sollen verfahrenstechnisch offenbarte Merkmale als vorrichtungstechnisch offenbart, und vorrichtungstechnisch offenbarte Merkmale als verfahrenstechnisch offenbart gelten.

In einer konkreten Ausgestaltung des Bauteileverbunds wird vorgeschlagen, dass das erste Bauteil aus Kupfer und das zweite Bauteil aus Aluminium besteht. Dadurch wird auf relativ einfache Art und Weise durch die unterschiedlichen Schmelzpunkte der Materialien der beiden Bauteile der Vorteil erzielt, dass beim Aufschmelzen des zweiten Bauteils ein Aufschmelzen bzw. eine Beschädigung der die Mikro- und Nanostruktur aufweisenden Oberflächenstruktur des ersten Bauteils vermieden wird.

Um eine mechanisch besonders belastbare bzw. feste Verbindung der an dem Bauteileverbund beteiligten beiden Bauteile zu erzielen, ist es erfindungsgemäß vorgesehen, dass zwischen den beiden Bauteilen, vorzugsweise im Bereich der beiden Kontaktoberflächen, eine zusätzliche Formschlussverbindung ausgebildet ist.

Konstruktiv kann eine erste Kontaktoberfläche bzw. die Formschlussverbindung an einem Umfang des ersten Bauteils im Bereich einer Ringnut ausgebildet sein. Alternativ ist es jedoch auch denkbar, dass die erste Kontaktoberfläche im Bereich einer Ausnehmung oder Vertiefung am ersten Bauteil ausgebildet ist.

Bei einem bevorzugten Verfahren zum Herstellen des Bauteileverbunds ist es vorgesehen, dass das Erwärmen des zweiten Bauteils mittels eines Laserstrahls, mittels Ultraschalls oder mittels Flammeinwirkung erfolgt. Die geeignete Wahl der Wärmequelle hängt dabei stark von dem jeweils vorgesehenen Einsatz bzw. der geometrischen Anordnung und Ausbildung der Bauteile ab.

Eine bevorzugte Verwendung des erfindungsgemäßen Bauteileverbunds wird in der Verbindung von Bauteilen oder Elementen in elektronischen oder elektrischen Komponenten, insbesondere in Steuergeräten, Sensoren und Steckern, oder zur Verbindung von Batteriezellen, jeweils vorzugsweise bei Kraftfahrzeuganwendungen, gesehen.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Längsschnitt durch einen ersten erfindungsgemäßen Bauteileverbund, bei der eine strukturierte Oberflächenstruktur an einer Stirnfläche eines ersten Bauteils ausgebildet ist und
- Fig. 2: einen zweiten erfindungsgemäßen Bauteileverbund, bei der die strukturierte Oberflächenstruktur am Umfang eines ersten Bauteils ausgebildet ist.

Gleiche Elemente bzw. Elemente mit gleicher Funktion sind in den Figuren mit den gleichen Bezugsziffern versehen.

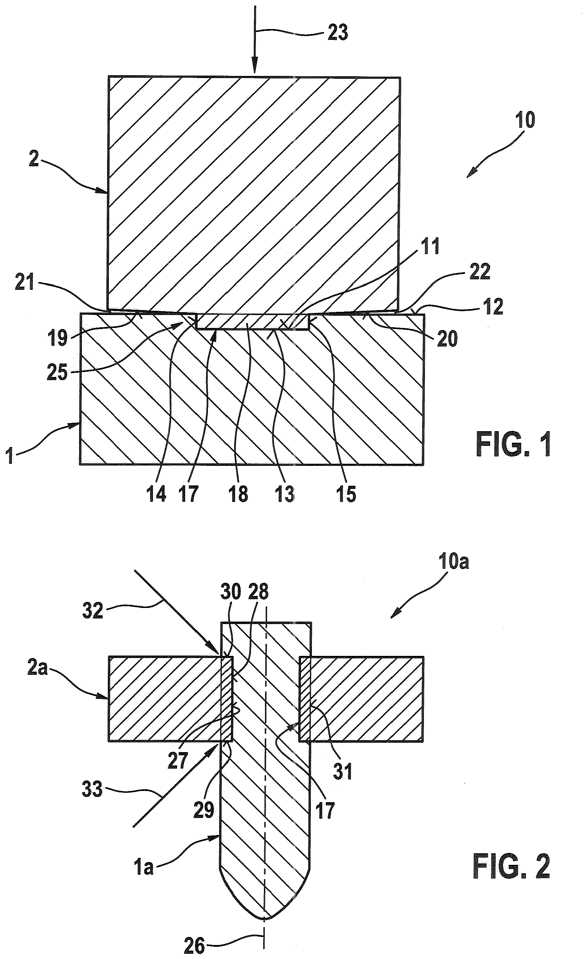

In der Fig. 1 ist ein erster Bauteileverbund 10 dargestellt, der zwei Bauteile 1, 2 umfasst. Beide Bauteile 1, 2 bestehen aus Metall. Beispielsweise besteht das eine, erste Bauteil 1 aus Kupfer und das andere, zweite Bauteil 2 aus Aluminium. Wesentlich ist, dass der Schmelzpunkt des Materials des ersten Bauteils 1 höher liegt als der Schmelzpunkt des Materials des zweiten Bauteils 2. Im dargestellten Ausführungsbeispiel weisen beide Bauteile 1, 2 beispielhaft eine in etwa blockförmige Form auf. Das erste Bauteil 1 weist auf der dem zweiten Bauteil 2 zugewandten Stirnseite eine im Querschnitt in etwa rechteckförmige Ausnehmung bzw. Vertiefung 11 auf. Die Oberseite 12 des ersten Bauteils 1 ist als ebene bzw. plane Oberseite 12 ausgebildet. Die die Vertiefung 11 ausbildenden Flächen, zumindest die dem zweiten Bauteil 2 gegenüberliegende Stirnfläche 13, vorzugsweise jedoch auch die am Umfang der Vertiefung 11 angeordneten Umfangsflächen 14, 15 (sowie die parallel zur Zeichenebene der Fig. 1 vorhandenen, nicht dargestellten Umfangsflächen) weist jeweils eine Oberflächenstruktur 17 auf. Die Oberflächenstruktur 17 bildet eine erste Kontaktoberfläche (für das zweite Bauteil 2) aus und ist mittels elektromagnetischer Strahlung, insbesondere mittels einer Laserstrahleinrichtung, erzeugt, und weist eine von einer Nanostruktur überlagerte Mikrostruktur auf.

Bezüglich der genauen Ausbildung einer derartigen Oberflächenstruktur 17, d.h. wie eine derartige Oberflächenstruktur 17 erzeugt wird, und welche geometrischen Verhältnisse die Oberflächenstruktur 17 aufweisen kann, wird auf die DE 10 2008 040 782 A1 der Anmelderin verwiesen, deren Offenbarung diesbezüglich Bestandteil dieser Anmeldung sein soll.

Das zweite Bauteil 2 weist auf der dem ersten Bauteil 1 zugewandten Seite einen entsprechend der Geometrie der Vertiefung 11 ausgebildeten Fortsatz 18 auf, der zumindest annäherungsweise formschlüssig in die Vertiefung 11 hineinragt, und der eine zweite Kontaktoberfläche ausbildet. Ferner ist anhand der Fig. 1 erkennbar, dass die beiden seitlich des Fortsatzes 18 ausgebildeten Stirnflächen 19, 20 des zweiten Bauteils 2 leicht schräg ausgebildet bzw. angeordnet sind, so dass sich ein in etwa keilförmiger Spalt 21, 22 im Verbindungsbereich der beiden Bauteile 1, 2 einstellt.

Das Verbinden der beiden Bauteile 1, 2 erfolgt dadurch, dass das Material des einen niedrigeren Schmelzpunkt aufweisenden Bauteils 2 lediglich lokal, im dargestellten Ausführungsbeispiel beispielsweise im Bereich des Fortsatzes 18, über seinen Schmelzpunkt hinaus erwärmt wird, und dass in diesem Zustand das Bauteil 2 mit seinem Fortsatz 18 in die Vertiefung 11 in Richtung des Pfeils 23 hineingedrückt wird. Dabei wird durch das Aufbringen einer Kraft in Richtung des Pfeils 23 eine Anlage des Fortsatzes 18 mit seiner zweiten Kontaktoberfläche an der die erste Kontaktoberfläche ausbildenden Oberflächenstruktur 17 des Bauteils 1 gewährleistet, so dass das verflüssigte Material des Bauteils 2 die Oberflächenstruktur 17 ausfüllt und für eine erhöhte Haftung bzw. verbesserte Verbindung und Dichtigkeit zwischen den beiden Bauteilen 1, 2 sorgt. Durch die Vertiefung 11 bzw. den Fortsatz 18 wird zwischen den beiden Bauteilen 1, 2 darüber hinaus eine (zusätzliche) Formschlussverbindung 25 ausgebildet, die eine Relativbewegung der beiden Bauteile 1, 2 in einer Richtung parallel zur Oberseite 12 des ersten Bauteils 1 bzw. zu den Stirnflächen 19, 20 des zweiten Bauteils 2 verhindert.

In der Fig. 2 ist ein abgewandelter Bauteileverbund 10a dargestellt. Hierbei ist das erste Bauteil 1a stiftförmig mit einer Längsachse 26 ausgebildet, und weist in Höhe des zweiten Bauteils 2a eine radial umlaufende Ringnut 27 auf. Zumindest der Grund 28 der Ringnut 27, vorzugsweise jedoch auch die beiden radial umlaufenden Flächen 29, 30 der Ringnut 27 weisen in Analogie zum Bauteil 1 des Bauteileverbunds 10 eine Oberflächenstruktur 17 auf, wobei die Oberflächenstruktur 17 eine erste Kontaktoberfläche ausbildet.

Das zweite Bauteil 2a ist beispielhaft plattenförmig ausgebildet und weist eine Durchgangsbohrung 31 auf, die insbesondere ein Durchstecken des ersten Bauteils 1 durch das Bauteil 2 ermöglicht. Die beiden Bauteile 1a, 2a bilden eine stromführende Steckverbindung aus, wobei das Bauteil 1a beispielsweise einen Pin, und das Bauteil 2a beispielsweise ein Stanzgitter ausbildet.

Beispielsweise durch Einwirkung eines Laserstrahls 32, 33 an der Oberseite bzw. der Unterseite des zweiten Bauteils 2a im Anschlussbereich an das erste Bauteil 1a wird das Material des zweiten Bauteils 2a, zumindest bereichsweise, über seinen Schmelzpunkt hinaus erwärmt, so dass das verflüssigte Material, eine zweite Kontaktoberfläche ausbildend, die in der Ringnut 27 des ersten Bauteils 1a ausgebildete Oberflächenstruktur 17 ausfüllt, so dass die beiden Kontaktoberflächen in Anlagekontakt gelangen. Die beiden Bauteile 1a, 2a bilden im Endzustand infolge der Ringnut 27 ebenfalls eine zusätzliche Formschlussverbindung 25 aus, die verhindert, dass die beiden Bauteile 1a, 2a in Richtung der Längsachse 26 zueinander bewegt werden können.

Ergänzend wird erwähnt, dass es anstelle der Verwendung eines Laserstrahls 32, 33 auch denkbar ist, das lokale Erwärmen des zweiten Bauteils 2a an dem Bauteileverbund 10, 10a mittels anderer Wärmequellen durchzuführen. Eine derartige andere Wärmequelle kann beispielsweise in der Verwendung einer Flamme oder eines Ultraschallschwingungserzeugers bestehen.

Der soweit beschriebene Bauteileverbund 10, 10a kann in vielfältiger Art und Weise abgewandelt bzw. modifiziert werden, ohne vom Erfindungsgedanken abzuweichen. Insbesondere kann die geometrische Form der Bauteile 1, 1a, 2, 2a von den dargestellten geometrischen Ausbildungen abweichen, oder es können andere (metallische) Materialpaarungen verwendet werden. Erfindungswesentlich ist lediglich, dass das zweite Bauteil 2, 2a ebenfalls aus Metall besteht und einen niedrigeren Schmelzpunkt aufweist als das erste Bauteil 1, 1a.

## Patentansprüche

1. Bauteileverbund (10; 10a), umfassend ein erstes Bauteil (1; 1a) mit einer ersten Kontaktoberfläche und mindestens einem zweiten Bauteil (2; 2a) mit einer an der ersten Kontaktoberfläche anliegenden zweiten Kontaktoberfläche, wobei die erste Kontaktoberfläche eine Oberflächenstruktur (17) hat, die eine von einer Nanostruktur überlagerte Mikrostruktur aufweist, wobei die Mikrostruktur Mikrostrukturelemente mit einem Durchmesser in einem Größenbereich von 1 Mikrometer bis 999 Mikrometer aufweist, und
die Nanostruktur Nanostrukturelemente mit einem Durchmesser in einem Größenbereich von 1 Nanometer bis 999 Nanometer aufweist, wobei die Anlage der zweiten Kontaktoberfläche an der ersten Kontaktoberfläche durch zumindest teilweises Aufschmelzen des Materials des zweiten Bauteils (2; 2a) erfolgt, wobei das Material des ersten Bauteils einen höheren Schmelzpunkt aufweist als das Material des zweiten Bauteils, wobei dass das erste Bauteil (1; 1a) und das zweite Bauteil (2; 2a) aus Metall besteht, wobei
dass das erste Bauteil (1; 1a) zumindest überwiegend aus Kupfer und das zweite Bauteil (2; 2a) zumindest überwiegend aus Aluminium besteht, **dadurch gekennzeichnet, dass**
zwischen den beiden Bauteilen (1; 1a, 2; 2a), vorzugsweise im Bereich der beiden Kontaktoberflächen, eine zusätzliche Formschlussverbindung (25) ausgebildet ist.

2. Bauteileverbund nach Anspruch 1,
**dadurch gekennzeichnet,**
**dass** die beiden Bauteile (1a, 2a) eine Steckverbindung ausbilden.

3. Bauteileverbund nach einem der Ansprüche 1 bis 2,
**dadurch gekennzeichnet,**
**dass** die erste Kontaktoberfläche im Bereich einer Ringnut (27) am ersten Bauteil (1a) ausgebildet ist.

4. Bauteileverbund nach einem der Ansprüche 1 bis 2,
**dadurch gekennzeichnet,**
**dass** die erste Kontaktoberfläche im Bereich einer Ausnehmung (11) am ersten Bauteils (1) ausgebildet ist.

5. Verfahren zum Herstellen eines Bauteileverbunds (10; 10a), nach einem der vorhergehenden Ansprüche, umfassend ein erstes Bauteil (1; 1a) mit einer ersten Kontaktoberfläche und mindestens einem zweiten Bauteil (2; 2a) mit einer zweiten Kontaktoberfläche, wobei die erste Kontaktoberfläche mit einer Oberflächenstruktur (17) versehen wird, die eine von einer Nanostruktur überlagerte Mikrostruktur aufweist, wobei
die Mikrostruktur Mikrostrukturelemente mit einem Durchmesser in einem Größenbereich von 1 Mikrometer bis 999 Mikrometer aufweist, und
die Nanostruktur Nanostrukturelemente mit einem Durchmesser in einem Größenbereich von 1 Nanometer bis 999 Nanometer aufweist und wobei das Material des zweiten Bauteils (2; 2a) zur Anlage an das erste Bauteil (1; 1a) auf eine Temperatur über seinen Schmelzpunkt erwärmt wird, wobei das Material des ersten Bauteils einen höheren Schmelzpunkt aufweist als das Material des zweiten Bauteils, wobei
dass das erste Bauteil (1; 1a) und das zweite Bauteil (2; 2a) aus Metall besteht und weiterhin
das erste Bauteil (1; 1a) zumindest überwiegend aus Kupfer und das zweite Bauteil (2; 2a) zumindest überwiegend aus Aluminium besteht.
wobei das Erwärmen des Materials des zweiten Bauteils (2; 2a) über seinen Schmelzpunkt lediglich lokal im Anlagebereich an das erste Bauteil (1; 1a) erfolgt,
**dadurch gekennzeichnet, dass**
zwischen den beiden Bauteilen (1; 1a, 2; 2a), vorzugsweise im Bereich der beiden Kontaktoberflächen, eine zusätzliche Formschlussverbindung (25) ausgebildet wird.

6. Verfahren nach Anspruch 5,
**dadurch gekennzeichnet,**
**dass** das Erwärmen des zweiten Bauteils (2a) mittels eines Laserstrahls (32, 33), mittels Ultraschalls oder mittels Flammeinwirkung erfolgt.

7. Verfahren nach Anspruch 5 oder 6,
**dadurch gekennzeichnet,**
**dass** die Oberflächenstruktur (17) mittels elektromagnetischer Strahlung mittels einer Laserstrahleinrichtung erzeugt wird.

8. Verwendung eines Bauteileverbunds (10; 10a) nach den Ansprüchen 1 bis 4 zur Verbindung von Bauteilen (1; 1a, 2; 2a) oder Elementen in elektronischen oder elektrischen Komponenten, insbesondere in Steuergeräten, Sensoren und Steckern, oder zur Verbindung bei Batterien.

## Claims

1. Composite component assembly (10; 10a), comprising a first component (1; 1a) with a first contact surface and at least a second component (2; 2a) with a second contact surface abutting against the first contact surface, wherein the first contact surface has a surface structure (17) which comprises a microstructure superposed with a nanostructure, wherein the microstructure comprises microstructure elements having a diameter in a size range of 1 micrometre to 999 micrometres, and the nanostructure comprises nanostructure elements having a diameter in a size range of 1 nanometre to 999 nanometres, wherein the abutment of the second contact surface against the first contact surface is effected by at least partial melting of the material of the second component (2; 2a), wherein the material of the first component has a higher melting point than the material of the second component, wherein
in that the first component (1; 1a) and the second component (2; 2a) are composed of metal, wherein in that the first component (1; 1a) is composed at least predominantly of copper and the second component (2; 2a) is composed at least predominantly of aluminium,
**characterized in that**
an additional form-fit connection (25) is formed between the two components (1; 1a, 2; 2a), preferably in the region of the two contact surfaces.

2. Composite component assembly according to Claim 1, **characterized**
**in that** the two components (1a, 2a) form a plug-in connection.

3. Composite component assembly according to one of Claims 1 to 2,
**characterized**
**in that** the first contact surface is formed in the region of an annular groove (27) on the first component (1a).

4. Composite component assembly according to one of Claims 1 to 2,
**characterized**
**in that** the first contact surface is formed in the region of a recess (11) on the first component (1).

5. Method for producing a composite component assembly (10; 10a) according to one of the preceding claims, comprising a first component (1; 1a) with a first contact surface and at least a second component (2; 2a) with a second contact surface, wherein the first contact surface is provided with a surface structure (17) which comprises a microstructure superposed with a nanostructure, wherein the microstructure comprises microstructure elements having a diameter in a size range of 1 micrometre to 999 micrometres, and the nanostructure comprises nanostructure elements having a diameter in a size range of 1 nanometre to 999 nanometres, and wherein the material of the second component (2; 2a) is heated to a temperature above its melting point for abutment against the first component (1; 1a), wherein the material of the first component has a higher melting point than the material of the second component, wherein
in that the first component (1; 1a) and the second component (2; 2a) are composed of metal, and furthermore
the first component (1; 1a) is composed at least predominantly of copper and the second component (2; 2a) is composed at least predominantly of aluminium, wherein the material of the second component (2; 2a) is heated above its melting point merely locally in the region of abutment against the first component (1; 1a),
**characterized in that**
an additional form-fit connection (25) is formed between the two components (1; 1a, 2; 2a), preferably in the region of the two contact surfaces.

6. Method according to Claim 5,
**characterized**
**in that** the second component (2a) is heated by means of a laser beam (32, 33), by means of ultrasound or by means of exposure to flames.

7. Method according to Claim 5 or 6,
**characterized**
**in that** the surface structure (17) is produced by means of electromagnetic radiation by means of a laser beam device.

8. Use of a composite component assembly (10; 10a) according to Claims 1 to 4 for connection of components (1; 1a, 2; 2a) or elements in electronic or electrical components, in particular in control units, sensors and connectors, or for connection in batteries.

## Revendications

1. Pièce composite (10 ; 10a), comprenant une première pièce (1 ; 1a) munie d'une première surface de contact et au moins une deuxième pièce (2 ; 2a) munie d'une deuxième surface de contact appliquée sur la première surface de contact, la première surface de contact ayant une structure de surface (17), qui comprend une microstructure sur laquelle est superposée une nanostructure,
la microstructure comprenant des éléments de microstructure ayant un diamètre dans une plage de taille allant de 1 micromètre à 999 micromètres, et
la nanostructure comprenant des éléments de nanostructure ayant un diamètre dans une plage de taille allant de 1 nanomètre à 999 nanomètres, l'application de la deuxième surface de contact sur la première surface de contact ayant lieu par fusion au moins partielle du matériau de la deuxième pièce (2 ; 2a), le matériau de la première pièce présentant un point de fusion plus élevé que le matériau de la deuxième pièce,
en ce que la première pièce (1 ; 1a) et la deuxième pièce (2 ; 2a) étant constituées de métal,
en ce que la première pièce (1 ; 1a) étant au moins majoritairement constituée de cuivre et la deuxième pièce (2 ; 2a) étant au moins majoritairement constituée d'aluminium,
**caractérisée en ce que**
un assemblage par accouplement de forme supplémentaire (25) est formé entre les deux pièces (1 ; 1a, 2 ; 2a), de préférence dans la zone des deux surfaces de contact.

2. Pièce composite selon la revendication 1, **caractérisée en ce que** les deux pièces (1a, 2a) forment un assemblage par enfichage.

3. Pièce composite selon l'une quelconque des revendications 1 à 2, **caractérisée en ce que** la première surface de contact est formée dans la zone d'une rainure annulaire (27) sur la première pièce (1a).

4. Pièce composite selon l'une quelconque des revendications 1 à 2, **caractérisée en ce que** la première surface de contact est formée dans la zone d'un évidement (11) sur la première pièce (1).

5. Procédé de fabrication d'une pièce composite (10 ; 10a) selon l'une quelconque des revendications précédentes, comprenant une première pièce (1; 1a) munie d'une première surface de contact et au moins une deuxième pièce (2 ; 2a) munie d'une deuxième surface de contact, la première surface de contact étant munie d'une structure de surface (17), qui comprend une microstructure sur laquelle est superposée une nanostructure,
la microstructure comprenant des éléments de microstructure ayant un diamètre dans une plage de taille allant de 1 micromètre à 999 micromètres, et la nanostructure comprenant des éléments de nanostructure ayant un diamètre dans une plage de taille allant de 1 nanomètre à 999 nanomètres, et le matériau de la deuxième pièce (2 ; 2a) étant porté à une température supérieure à son point de fusion pour l'application sur la première pièce (1; 1a), le matériau de la première pièce présentant un point de fusion plus élevé que le matériau de la deuxième pièce, en ce que la première pièce (1 ; 1a) et la deuxième pièce (2 ; 2a) étant constituées de métal, et par ailleurs
la première pièce (1; 1a) étant au moins majoritairement constituée de cuivre et la deuxième pièce (2 ; 2a) étant au moins majoritairement constituée d'aluminium,
le chauffage du matériau de la deuxième pièce (2 ; 2a) au-dessus de son point de fusion n'ayant lieu que localement dans la zone d'application sur la première pièce (1 ; 1a),
**caractérisé en ce que**
un assemblage par accouplement de forme supplémentaire (25) est formé entre les deux pièces (1 ; 1a, 2 ; 2a), de préférence dans la zone des deux surfaces de contact.

6. Procédé selon la revendication 5, **caractérisé en ce que** le chauffage de la deuxième pièce (2a) a lieu au moyen d'un faisceau laser (32, 33), au moyen d'ultrasons ou au moyen de l'effet d'une flamme.

7. Procédé selon la revendication 5 ou 6, **caractérisé en ce que** la structure de surface (17) est produite au moyen d'un rayonnement électromagnétique au moyen d'un appareil à faisceau laser.

8. Utilisation d'une pièce composite (10 ; 10a) selon les revendications 1 à 4 pour l'assemblage de pièces (1; 1a, 2 ; 2a) ou d'éléments dans des composants électroniques ou électriques, notamment dans des appareils de commande, des capteurs et des connecteurs, ou pour l'assemblage dans des batteries.
